# EUROPEAN PATENT SPECIFICATION

(11) **EP 4 090 919 B1**
(45) Date of publication and mention of the grant of the patent: **31.01.2024**
(21) Application number: 21705407.1
(22) Date of filing: 12.01.2021
(51) Int. Cl.: G01F 19/00, A61J 7/00, B65D 1/02

(54) **DOSING CUPS AND MEDICINAL FLUID DELIVERY SYSTEMS**
DOSIERBECHER UND MEDIZINISCHE FLUIDABGABESYSTEME
COUPELLES DE DOSAGE ET SYSTÈMES D'ADMINISTRATION DE FLUIDE MÉDICAL

(30) Priority: 13.01.2020 US 202062960168 P
(43) Date of publication of application: 23.11.2022
(73) Proprietor: The Procter & Gamble Company, Cincinnati, OH 45202 (US)
(72) Inventor: REICHLING, Timothy, David, Cincinnati, Ohio 45202 (US); VAN SKAIK, Elliott, Michael, Cincinnati, Ohio 45202 (US); VILLALONGO ANDINO, Germara, Cincinnati, Ohio 45202 (US); REGO, John, Hamilton, Ohio 45014 (US); DICKESS, Leonard, Hamilton, Ohio 45014 (US); PHILHOWER, Scott, Hamilton, Ohio 45014 (US)
(74) Representative: P&G Patent Germany
(86) International application number: PCT/US2021/070021
(87) International publication number: WO 2021/146746

(56) References cited:
- DE-A1-102007 002 983
- JP-B2- 6 364 917
- KR-U- 19990 007 318
- US-A- 5 137 316
- US-A1- 2017 057 710
- US-B1- 9 308 149

## Description

### TECHNICAL FIELD

The present specification generally relates to dosing cups for delivery of a medicinal fluid and, more specifically, dosing cups and medicinal fluid delivery systems that include integral anti-nesting features and optional retention features.

### BACKGROUND

Medicinal fluids may be provided in a bottle that includes a dosing cup for delivery of the proper dosage to a user. Said cups comprise a base, side walls and one or more gripping portion at the sidewalls as disclosed for example in DE 10 2007 002 983 A1 or JP 6 364917 B2. During manufacturing, dosing cups may become nested within on another, which may disrupt process flows as nested dosing cups may interfere with packaging processes leading to production inefficiencies. Additionally, once the dosage cup is provided to the consumer, often the dosing cup may be difficult to read due to layout, text type, text size, and/or wetting of dosing indicia formed on the interior of the dosing cup. Moreover, the dosing cup may be easily lost which may lead to consumers using non-approved measuring devices for measuring dosage. Accordingly, a need exists for alternative dosing cups and medicinal fluid delivery systems to address the above issues.

### SUMMARY

In one embodiment, a dosing cup for delivery of medicinal fluid includes a base wall, a sidewall, a first gripping portion, and a second gripping portion. The sidewall extends from the base wall to an upper rim, thereby defining a medicinal fluid-receiving volume. The first gripping portion is formed at a first position of the sidewall. The second gripping portion is formed at a second position of the sidewall opposite the first position across the medicinal fluid-receiving volume. Each of the first gripping portion and the second gripping portion include one or more anti-nesting projections that extend from an outer surface of the sidewall a distance beyond an inner diameter of the upper rim.

In another embodiment, a medicinal fluid delivery system includes a bottle and a dosing cup configured to releasably engage a portion of the bottle. The dosing cup includes a base wall, a sidewall, a first gripping portion, and a second gripping portion. The sidewall extends from the base wall to an upper rim, thereby defining a medicinal fluid-receiving volume. The first gripping portion is formed at a first position of the sidewall. The second gripping portion is formed at a second position of the sidewall opposite the first position across the medicinal fluid-receiving volume. Each of the first gripping portion and the second gripping portion include one or more anti-nesting projections that extend from an outer surface of the sidewall a distance beyond an inner diameter of the upper rim. The anti-nesting projections are configured to engage an upper rim of a second dosing cup to prevent the dosing cup from nesting within the second dosing cup.

The dosing cup may further include one or more retention beads. Further, the sidewall may include a first step out defining a first volume and a second step out defining a second volume. The one or more retention beads are formed on an interior surface of the sidewall opposite both the first gripping portion and the second gripping portion, wherein the one or more retention beads are configured to releasably engage the portion of the bottle to secure the dosing cup to the bottle.

These and additional features provided by the embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1A depicts a top perspective view of a dosing cup for delivery of a medicinal fluid, according to one or more embodiments shown and described herein;
FIG. 1B depicts a bottom perspective view of the dosing cup of FIG. 1A, according to one or more embodiments shown and described herein;
FIG. 1C depicts a front view of the dosing cup of FIG. 1A, according to one or more embodiments shown and described herein;
FIG. 1D depicts a side view of the dosing cup of FIG. 1A showing a gripping portion, according to one or more embodiments shown and described herein;
FIG. 1E depicts a cross-section taken along line E-E of FIG. 1C, according to one or more embodiments shown and described herein;
FIG. 1F depicts a cross-section taken along line F-F of FIG. 1D, according to one or more embodiments shown and described herein;
FIG. 1G depicts a bottom view of a base wall of the cup of FIG. 1A, according to one or more embodiments shown and described herein;
FIG. 1H depicts a top view into a medicinal fluid-receiving volume of the cup of FIG. 1A, according to one or more embodiments shown and described herein;
FIG. 2 depicts a dosing cup with an alternative gripping portion, according to one or more embodiments shown and described herein;
FIG. 3 depicts a dosing cup with an alternative gripping portion, according to one another embodiments shown and described herein;
FIG. 4A depicts two dosing cups in a stacked arrangement, according to one or more embodiments shown and described herein;
FIG. 4B depicts a cross-section of the two dosing cups of FIG. 4A, according to one or more embodiments shown and described herein;
FIG. 5A depicts a perspective view of a bottle with a dosing cup attached thereto, according one or more embodiments shown and described herein; and
FIG. 5B depicts a cross-section of the bottle and dosing cup of the FIG. 5A, according to one or more embodiments shown and described herein.

### DETAILED DESCRIPTION

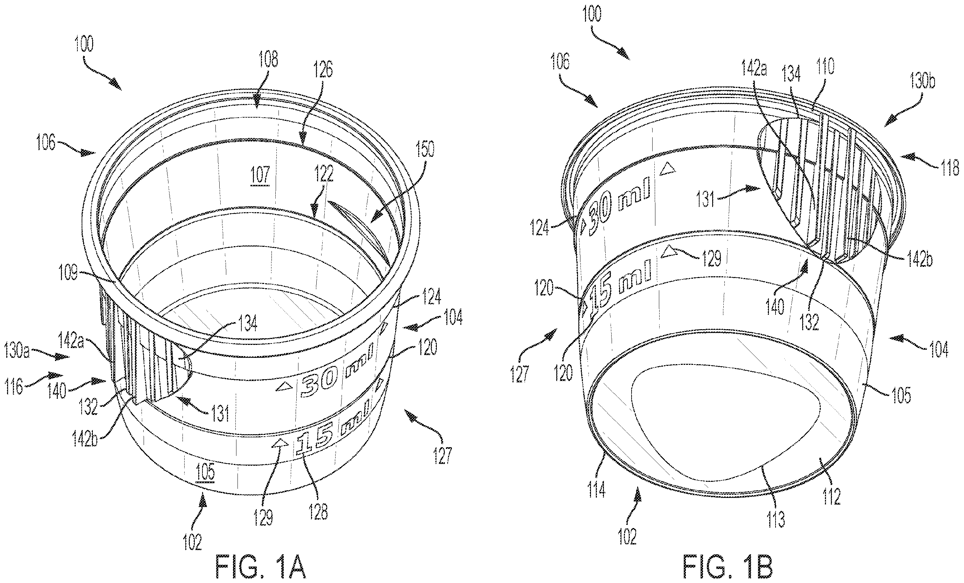

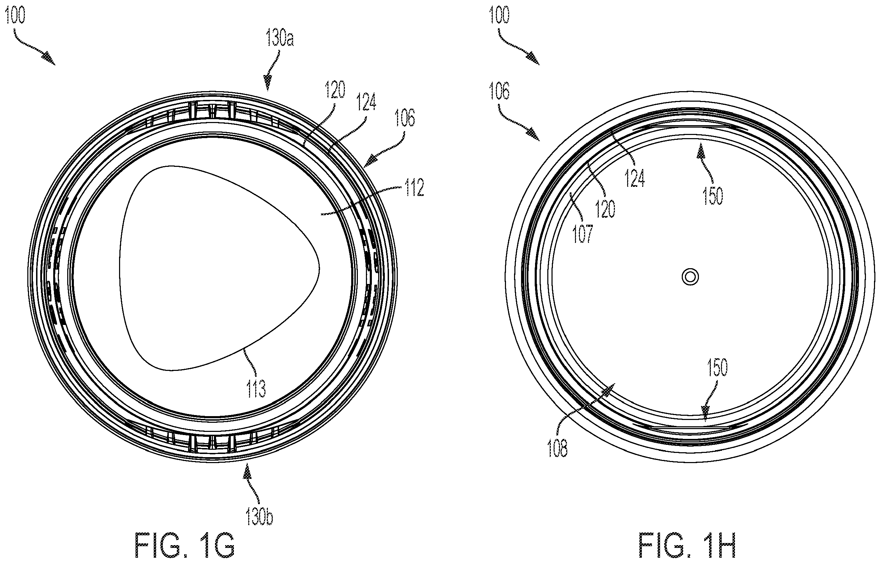

Embodiments of the present disclosure are directed to dosing cups for delivery of a medicinal fluid and to medicinal fluid delivery systems. In general dosing cups and medicinal fluid delivery systems as described herein are directed to including structures such as anti-nesting features for prevention of nesting of dosing cups during manufacture, visual and/or tactile aids in determining proper dosage amounts, and/or retention beads that allow the dosing cup to be removably engaged with a bottle (e.g., such as a cap or closure of the bottle) of the medicinal fluid delivery system. For example, and referring generally to FIGS. 1A-1H, in at least one embodiment, a dosing cup for delivery of medicinal fluid includes a base wall, a sidewall, a first gripping portion, and a second gripping portion. The sidewall extends from the base wall to an upper rim, thereby defining a medicinal fluid-receiving volume. The first gripping portion is formed at a first position of the sidewall. The second gripping portion is formed at a second position of the sidewall opposite the first position across the medicinal fluid-receiving volume. Each of the first gripping portion and the second gripping portion include one or more anti-nesting projections that extend from an outer surface of the sidewall a distance beyond an inner diameter of the upper rim. The anti-nesting projections are configured to engage an upper rim of a second dosing cup to prevent the dosing cup from nesting within the second dosing cup. As will be described in greater detail below, the anti-nesting features may improve manufacturability of the medicinal fluid delivery system. These and additional features will be discussed in greater detail with reference to the drawings below.

As used herein, the term "dosing cup" refers to any structure used to measure and administer a medicinal fluid.

As used herein, the term "medicinal fluid" may refer to any fluid used for the relief of symptoms, treatment, and/or prevention of disease, sickness or the like and/or recovery from disease, sickness, or the like. Medicinal fluids may include, but are not limited to, cold and/or flu medicine, headache medicine, gastrointestinal medicine, mouthwash, dietary supplements, etc.

As used herein, the term "removably engaged," "removably attached," "removably coupled," or similar terminology, refers to the ability of the dosing cup to be non-permanently secured to a portion of a bottle (e.g., a cap and/or closure of the bottle) and removed therefrom in a repeatable fashion.

Referring now to FIG. 1A-1H a dosing cup 100 is generally depicted. The dosing cup 100 is configured to allow a user to measure and administer a dosage of medicinal fluid. The dosing cup 100 may be made from any material and may be, injection molded for example. In some embodiments, the dosing cup 100 is made from a plastic material such as clarified polypropylene. In other embodiments, the dosing cup 100 may be made from glass, porcelain, polystyrene, or the like. The dosing cup 100 generally includes a base wall 102, a sidewall 104, and an upper rim 106. The sidewall 104 extends from the base wall 102 to the upper rim 106, thereby defining a medicinal fluid-receiving volume 108. The dosing cup 100 may be generally cylindrical as depicted, or may have alternative prismatic geometric shapes (e.g., triangular, rectangular, pentagonal, hexagonal, octagonal, etc.). In the illustrated embodiment, various portions of the sidewall 104 may be sloped, such that a cross-sectional diameter of the sidewall 104 taken near the base wall 102 may be smaller than cross-sectional diameter of the sidewall 104 taken near the upper rim 106 of the sidewall 104. The slope may be gradual or, as will be described in greater detail below, interrupted by one or more step outs (e.g., a first step out 120 and a second step out 124).

The base wall 102 may generally provide a stable base for the dosing cup 100 to be balanced. For example, the base wall 102 may be stably positioned on a flat surface, such as a tabletop, to allow a user to pour a medicinal fluid into the medicinal fluid-receiving volume 108. The base wall 102 may include one or more recessed portions 112 such that only a lower rim 114 of the dosing cup 100 may contact a flat surface if positioned thereon. In some embodiments, the base wall 102, for example the recessed portion 112, may include a textured surface 113 (e.g., an etched surface). The textured surface 113 may cover a percentage area of the base wall 102 or the recessed portion 112, for example, about 10% or more, about 20% or more, about 30% or more, about 40% or more, about 50% or more, about 60% or more, about 70% or more, about 80% or more, about 90% or more. In some embodiments, the textured surface 113 may have a shape such as, for example, a circle, oval, a guitar pick, an egg, triangle, a square, a rectangle, or any regular or irregular polygonal or non-polygonal shape. The shape of the textured surface 113 may further correspond to a product trademark, symbol, or logo. In some embodiments, the textured surface 113 can comprise manufacturer indicia to provide the consumer an indicator of the manufacturer. During injection molding, formation of the textured surface 113 on the base wall 102 (e.g., the recessed portion 112) may provide for easier release of the dosing cup 100 from the mold.

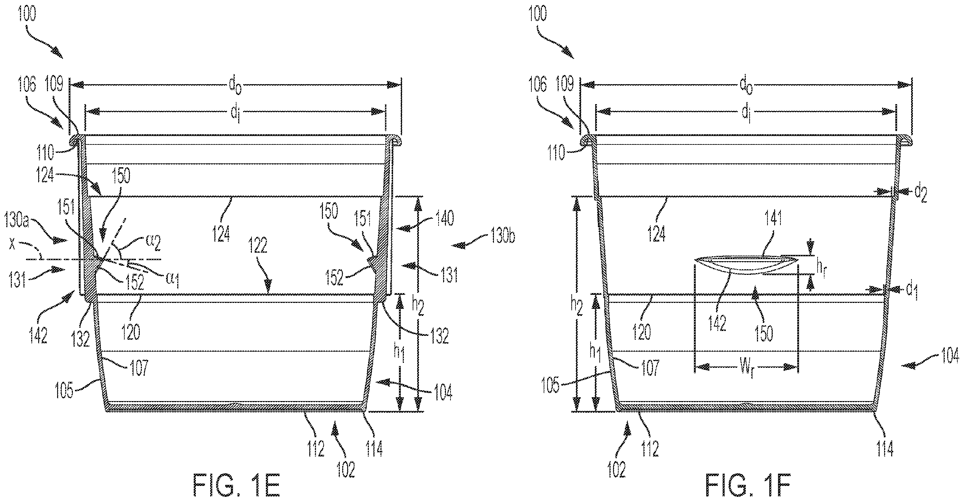

The upper rim 106 generally defines the open top of dosing cup 100 that provides access to the medicinal fluid-receiving volume 108. With reference to FIG. 1E and 1F, the upper rim 106 may define an inner rim diameter, dᵢ, and an outer rim diameter, dₒ, which is larger than the inner rim diameter, dᵢ. In embodiments, the outer rim diameter, dₒ, extends beyond to sidewall 104 of the dosing cup 100. The upper rim 106 may curve toward the base wall 102 of the dosing cup 100, which may provide additional security for one holding the dosing cup 100 and/or a more comfortable interface from which to drink from the dosing cup 100. While the dosing cup 100 may be any size, for some embodiments, the dosing cup 100 may have an outer rim diameter, dₒ, of about 40 mm to about 50 mm (e.g., about 45 mm), and the inner rim diameter, dᵢ, of about 35 mm to about 45 mm (e.g., about 40 mm).

The sidewall 104 may include an exterior surface 105 and an interior surface 107. As noted above, the sidewall 104 may be sloped such that a diameter of the interior of the dosing cup 100 increases from the base wall 102 to the upper rim 106. As noted above, the sidewall 104 may further define one or more step outs to provide a "flower pot" shape to the dosing cup 100. A step out refers to a sudden increase in diameter of the dosing cup 100 such that a visual and/or tactile interruption of the slope of the exterior and/or interior surfaces 105, 107 is formed. For example, the sidewall 104 may include a first step out 120 defining a first volume 122, and a second step out 124 defining a second volume 126 larger than the first volume 122. That is, the first step out 120 may be formed at a first height, hi, from the base wall 102, and the second step out 124 may be formed at a second height, h₂, from the base wall 102 that is greater than the first height. It is noted that dosing cup 100 may be any size, for some embodiments, the first step out 120 may be positioned at a first height, hi, of about 10 mm to about 20 mm (e.g., about 15 mm) and the second step out 124 may be positioned at a second height, h₂, of about 20 mm to about 30 mm (e.g., about 28 mm).

It is noted that, in some embodiments, the first and second steps outs 120, 124 may be equal in depth or the first and second step outs 120, 124 may have different depths (e.g., step out depth, d₁, corresponding to the first step out 120 and step out depth, d₂, corresponding to the second step out 124) as shown in the 1F. For example, a depth of the first step out 120 may be on a scale of about 0.05 mm to about 0.15 mm (e.g., about 0.09 mm) while a depth of the second step out 124 may be about 0.25 mm to about 0.35 mm (e.g., about 0.3 mm). That is, in some embodiments, the second step out 124 may have a depth of about 3 times greater than the first step out 120. However, other step out depth ratios are contemplated and possible.

As noted above, the dosing cup 100 may be used for measuring out of medicinal fluid. The one or more step outs may provide an indication of a specific volume or dosage amount of the medicinal fluid to be administered. For example, the first step out 120 may correspond to a first dosing amount of 15 mL, while the second step out 124 may correspond to a second dosing amount of 30 mL. However, other volumes are contemplated and possible so as to provide proper dosages for any particular medicinal fluid. The first step out 120 and the second step out 124 may provide a shelf within the interior surface 107 that acts as a visual indication to allow a user to measure the proper volume of medicinal fluid. That is, medicinal fluid may be poured into the dosing cup 100 until the level of medicinal fluid aligns with the first step out 120 or the second step out 124. Using the first step out 120 and the second step out 124 as indicators of medicinal fluid volume may allow a user to more easily measure the appropriate volume of medicinal fluid.

For example, users may fill and measure medicinal fluid into dosing cups in a variety of ways. Some consumers may hold the dosing cup 100 with one hand and pour the medicinal fluid with the other hand viewing the exterior of the dosing cup 100 while measuring. Others may place the dosing cup 100 on a rigid surface (e.g., a table or a countertop) and measure the medicinal fluid by viewing the interior of the dosing cup 100 from above. The first step out 120 and the second step out 124 allow for reading of the dosing volume from either above or from the side. Conventional dosing cups may have dosing indicia on the interior surface 107 of the dosing cup 100 (e.g., etched, or indented markings). However, such conventional interior indicia may be difficult to reach, particularly when the dosing cup 100 is filled with medicinal fluid. For example, the medicinal fluid may camouflage or "wet out" the conventional indicia, making it difficult to read. Exterior indicia may also be difficult to read due to size, font, color, and/or texture of such indicia. The first step out 120 and the second step out 124 on the other hand allow for reading of the dosing volume from above or the side, with ease. For example, as light enters the dosing cup it may be refracted when passing through the first and/or second step outs 120, 124, which may allow a user to more easily see the dosage indication provided by the first and/or second step outs 120, 124.

Additionally, the first step out 120 and the second step out 124 may allow for the dosing cup 100 to have a reduced wall thickness as compared to a dosing cup without one or more step outs. In particular, the first step out 120 and the second step out 124 can provide improved hoop strength to the dosing cup 100, allowing for reduced wall thickness. For example, the dosing cup 100 may have wall thickness of less than about 0.8 mm (e.g., about 0.5 mm). Additionally, the first step out 120 and the second step out 124 may provide additional tamper evidence. For example, during manufacture of a medicinal fluid delivery system, the dosing cup 100 is often shrink-wrapped to a bottle 201 carrying the medicinal fluid. The distinctive shape of the first step out 120 and then second step out 124 may be visible through the shrink-wrap to allow a user to know that the correct dosing cup is attached to the correct bottle and that tampering has not occurred. Additionally, the first and second step outs 120, 124 may provide points of stress concentrations on the shrink-wrap, making the shrink-wrap more likely to tear at the first and/second step outs 120, 124 when the dosing cup 100 is removed from the bottle in an attempt to tamper.

Additional dosing indicia may also be provided on the exterior surface 105 of the sidewall 104. For example, a dosage amount indicator 127 may be formed on the exterior surface 105 of the sidewall 104 (e.g., through molding, etching, carving, printing, or the like). In the illustrated, the dosage amount indicator 127 may include numerical indicators 128 and/or directional indicators 129. For example, "15 mL" may be formed on the exterior surface 105 of the sidewall 104 and may include one or more arrows that point to the first step out 120 to indicate the 15 mL dosage amount. Similarly, above the first step out 120 may be another dosage amount indicator 127 that includes 30 mL formed on the exterior surface 105 of the sidewall 104 and may include one or more arrows that point to the second step out 124 to indicate the 30 mL dosage amount. By providing the dosage amount indicator 127 on the exterior surface 105 of the dosing cup 100, the dosage amount indicator 127 is prevented from becoming wetted out by the medicinal fluid, which may otherwise cause the dosage amount indicators 127 to become more difficult to see. Additionally, it is noted that where dosage amount indicators 127 are formed on an interior surface 107 of the dosing cup 100, such indicia may tend to encourage fluid retention, such that fluid gets trapped in or to interior indicia, which may prevent administration of a full dose. Accordingly, it is beneficial to have the interior surface 107 of the dosing cup 100 to be substantially free of dosing indicia apart from the first step out 120 and the second step out 124, described above.

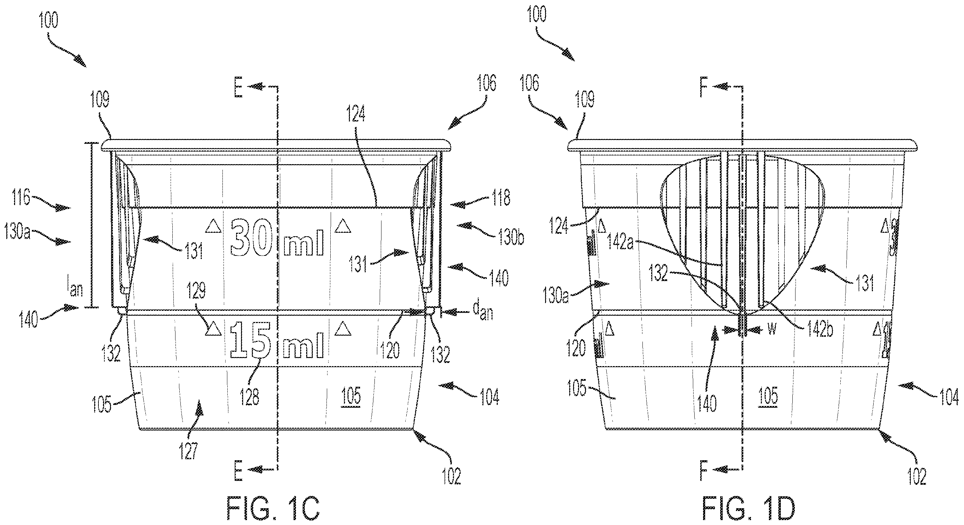

Referring to FIGS. 1A, 1B, and 1D, formed on the sidewall 104 may be a first gripping portion 130a formed at a first position 116 of the sidewall 104 and a second gripping portion 130b formed at a second position 118 of the sidewall 104 opposite the first position 116 across the medicinal fluid-receiving volume 108. This first gripping portion 130a and the second gripping portion 130b may be substantially identical to one another and may be positioned directly across from one another (i.e., 180 degrees apart) to encourage or cause a user to grip at least two points on the dosing cup 180 degrees apart from one another. In the illustrated embodiment, the dosage amount indicator 127 may be positioned between the first gripping portion 130a and the second gripping portion 130b (e.g., 90 degrees between the first gripping portion 130a and the second gripping portion 130b) to allow a user a clear view of the dosing indicia when held in the hand of the user. The first gripping portion 130a and the second gripping portion 130b can improve the ergonomics of the dosing cup 100 for holding, measuring, and/or administering the medicinal fluid. The first gripping portion 130a and the second gripping portion 130b may provide tactile feedback to a user that they are holding the dosing cup 100 correctly for optimal usage. The first gripping portion 130a and the second gripping portion 130b may also improve the grippability of the dosing cup 100 and help prevent the dosing cup 100 from slipping out of a user's fingers.

The first gripping portion 130a and the second gripping portion 130b may include, for example, a textured surface 134 (e.g., an etched and/or patterned surface) and/or a plurality of gripping projections 131 formed on an exterior surface 105 of the sidewall 104. The plurality of gripping projections 131 may be flanges that project from the exterior surface 105 of the sidewall 104. The plurality of gripping projections 131 may extend along the exterior surface 105 of the sidewall 104 between the upper rim 106 and the base wall 102. In some embodiments, the projections of the plurality of gripping projections 131 may have different lengths to provide a variable or gradient length throughout the first gripping portion 130a and the second gripping portion 130b. For example, the plurality of gripping projections 131 may define a gradient length having a maximum length at a center of the first gripping portion 130a and the second gripping portion 130b and a decreasing length outward from the center of the first gripping portion 130a and the second gripping portion 130b. For example, the plurality of projections may have a maximum length that extends through the first step out 120 (e.g., about 25 mm or less, about 22 mm or less, about 20 mm or less, about 10 mm or longer, about 15 mm or longer, about 20 mm or longer, etc. from the top surface 109 of the upper rim 106). Additionally, the plurality of gripping projections 131 may include a width, w. The width, w, of each of the gripping projections 131 may be constant along the length of each gripping projection or the width, w, may be tapered. For example, a width at a base of a projection may be narrower than a width of the projection near the upper rim 106. In some embodiments, the width of each gripping projection may be about 2 mm or less, for example about 1 mm or less. In some embodiments, the plurality of gripping projections 131 may have different widths from one another.

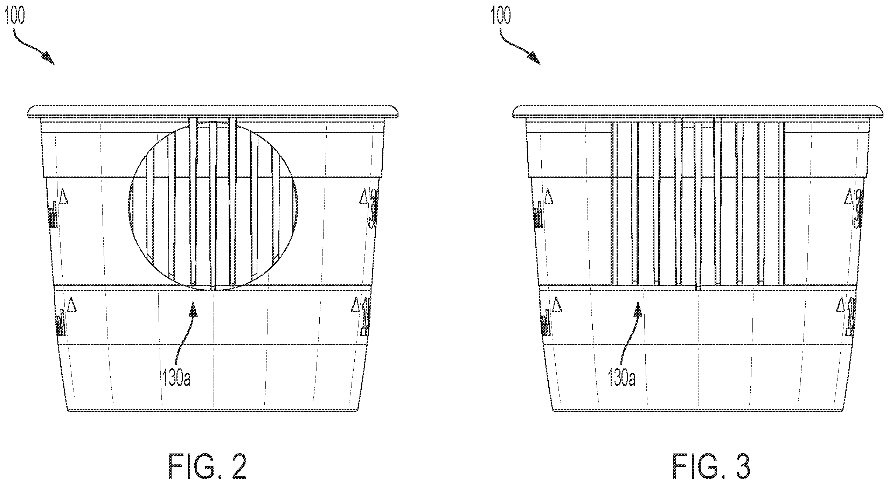

The plurality of gripping projections 131, along with or without any applied texturing may provide a general shape to the first gripping portion 130a and the second gripping portion 130b. For example, the first gripping portion 130a and the second gripping portion 130b may be guitar pick-shaped, generally circular (e.g., see FIG. 2), generally rectangular (e.g., see FIG. 3), or any other regular or irregular polygonal or non-polygonal shapes. In some embodiments, the first and second gripping portions 130a, 130b may be in the shape of a symbol, logo, or the like. While it is noted that the first and second gripping portions 130a, 130b may be any size, the first and second gripping portions 130a, 130b may each form a portion of the overall surface area of the sidewall 104 of the dosing cup 100 (e.g., about 5% or more, about 10% or more, about 15% or more, about 20% or more, about 30% or more, about 50% or less, about 40% or less, from about 5% to about 20%, from about 8% to about 15%, from about 10% to about 12%, etc.). It is noted that in various embodiments the size of the first and second gripping portions 130a, 130b are large enough to allow a user to hold the dosing cup 100 while still allowing a user to view the dosing indicia (e.g., the one or more step outs and/or other dosing indicia) between the first and second gripping portions 130a, 130b. That is, a portion of the sidewall 104 extending between the first and second gripping portions 130a, 130b may define a dosing region where the dosing indicia may be observed. It is noted, however, that if the first and second gripping portions 130a, 130b are too small (e.g., if the first or second gripping portion is less that about 5% of the overall surface area of the sidewall 104 of the dosing cup 100), the first and second gripping portions 130a, 130b may inadvertently create stress concentration points that may tear any shrink wrap (e.g., for tamper prevention) which may be applied during manufacturing.

Referring to FIG. 1E, the plurality of gripping projections 131 may be tapered such that that the plurality of gripping projections 131 extend further (i.e., have a greater depth) from the sidewall 104 of the dosing cup 100 at a base of the plurality of gripping projections 131 and then smoothly taper to be flush with the sidewall 104 at the top of the plurality of gripping projections 131 below the upper rim 106. For example, the plurality of gripping projections 131 may have a maximum depth of about 1 mm or less, 0.5 mm or less, etc.

In embodiments, at least a portion of the plurality of gripping projections 131 extend to the first step out 120. In some embodiments, at least one of the plurality of gripping projections extends past the first step out 120. For example, a central gripping projection 132 may extend through both the first step out 120 and the second step out 124. Referring again to FIG. 1D, the plurality of gripping projections 131 may be spaced apart from one another (e.g., about 3 mm or less, about 2 mm or less, etc.) to define spacing between each of the plurality of gripping projections 131. Such spacing may cause a user's fingers when grasping the first gripping portion 130a and the second gripping portion 130b to deform or mesh into the plurality of gripping projections 131 to provide a more secure grip. The plurality of gripping projections 131 may include two or more gripping projections, three or more gripping projections, four or more gripping projections, etc.

The first gripping portion 130a and the second gripping portion 130b may further include one or more anti-nesting projections 140 that extend from an exterior surface 105 of the sidewall 104 beyond the inner diameter, dᵢ, of the upper rim 106. As will be described in more detail below, the one or more anti-nesting projections 140 may prevent the dosing cup 100 from becoming nested within a second dosing cup 100b such that friction between the dosing cup 100 and the second dosing cup 100b causes the dosing cup 100 to stick to the second dosing cup 100b. This may be especially important during manufacturing when many dosing cups may be positioned within a delivery vessel together to be assembled to the bottle 201. Nested dosing cups may result in errors during manufacturing or stalling of assembly. Accordingly, the provision of one or more anti-nesting projections 140 may prevent unwanted nesting and increase manufacturing efficiency.

Conventional anti-nesting features may include ribs positioned along an interior surface 107 of the sidewall 104 of the dosing cup 100. However, placement of ribs along the interior surface 107 may result in unwanted fluid retention, which may prevent administration of a full dose to a user or cause increased drying time after rinsing the dosing cup 100. Accordingly, placing the one or more anti-nesting projections 140 on the exterior surface 105 of the dosing cup 100 allows for the interior surface 107 of the dosing cup 100 to remain smoother, which increases dosing accuracy and drying time after rinsing. Dosing cup 100 can be substantially free of anti-nesting projections and/or ribs along the interior surface 107 of the sidewall 104.

The one or more anti-nesting projections 140 may be flanges, similar to the plurality of gripping projections 131, that project from the exterior surface 105 of the sidewall 104. The one or more anti-nesting projections 140 may project further from the exterior surface 105 of the sidewall 104 than the plurality of gripping projections 131, such as illustrated in FIG. 1E. Similar to the plurality of gripping projections 131, the one or more anti-nesting projections 140 may be tapered such that a depth of the one or more anti-nesting projections 140 are greatest at a base of the one or more anti-nesting projections 140 and smallest at a top of the one or more anti-nesting projections 140. For example, the one or more anti-nesting projections 140 may have a maximum depth, dₐₙ, of between about 1 mm and about 2 mm (e.g., about 1.2 mm). The one or more anti-nesting projections 140 may have a similar width to that of the one or more gripping projections 131 (e.g., about 2 mm or less, for example about 1 mm or less. In some embodiments, the one or more anti-nesting projections 140 are interspersed among the plurality of gripping projections 131 so as to be camouflaged within the plurality of gripping projections 131.

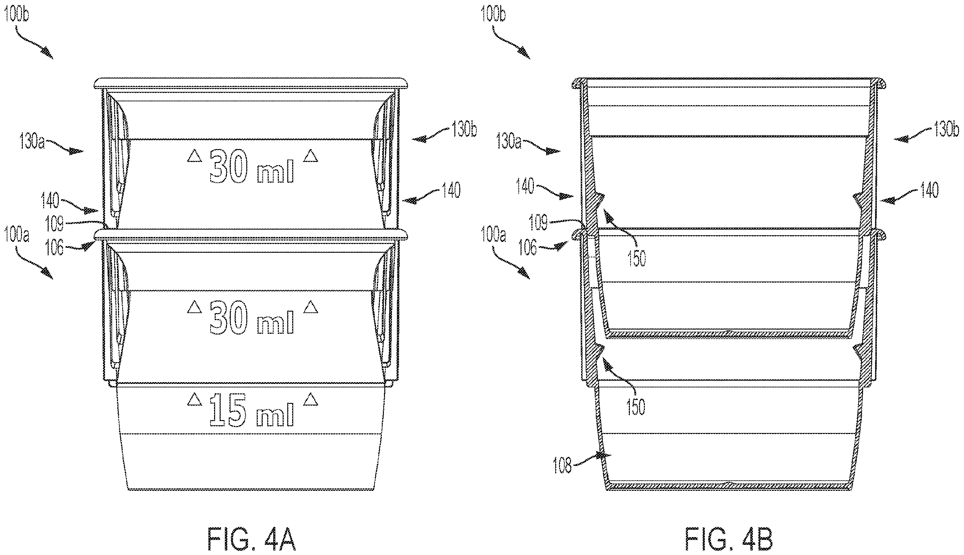

FIG. 4A and 4B illustrate a first dosing cup 100a and a second dosing cup 100b identical to the first dosing cup 100a, except that the second dosing cup 100b is positioned within a portion of the medicinal fluid-receiving volume 108 of the first dosing cup 100a. In the illustrated embodiment, the one or more anti-nesting projections 140 of the second dosing cup 100b is engaged with the top surface 109 of the upper rim 106 and prevents the second dosing cup 100b from becoming fully nested in the first dosing cup 100a. For example, the one or more anti-nesting projections 140 prevent the second dosing cup 100b from being inserted into the first dosing cup 100a such that friction between the first dosing cup 100a and the second dosing cup 100b causes the dosing cup 100 to stick to the second dosing cup 100b.

As noted above, the one or more anti-nesting projections 140 of each the first gripping portion 130a and the second gripping portion 130b may extend a distance beyond an inner diameter of the upper rim 106 from an exterior surface 105 of the sidewall 104 while remaining within the outer diameter, dₒ, of the upper rim 106. Accordingly, the second dosing cup 100b is positioned within the first dosing cup 100a, a level of interference may exist between the upper rim 106 of the first dosing cup 100a and the one or more anti-nesting projections 140 of the second dosing cup 100b. Such interference may be defined as the amount of overlap that the one or more anti-nesting projections 140 extend over the upper rim 106 of the first dosing cup 100a. For example, the overlap may be between about 10% and about 50%, between about 20% and about 40%, greater than about 10%, greater than about 20%, greater than about 30%, or any desired overlap. In one example embodiment, the one or more anti-nesting projections 140 may overlap about between about 0.7 mm and 0.8 mm of the upper rim 106 of the first dosing cup 100a, which is sufficient to prevent nesting of the second dosing cup 100b within the first dosing cup 100a.

Referring again to FIGS. 1A, 1B, and 1C, the one or more anti-nesting projections 140 of each of the first gripping portion 130a and the second gripping portion 130b may be positioned directly opposite one another across the medicinal fluid receiving volume. In some embodiments, the one or more anti-nesting projections 140 of the first gripping portion 130a and the second gripping portion 130b each include at least two anti-nesting projections including a first anti-nesting projection 142a and a second anti-nesting projection 142b. As noted above, the one or more anti-nesting projections 140 may be interspersed among the plurality of gripping projections 131 such that the first anti-nesting projection 142a and the second anti-nesting projection 142b are separated by at least one gripping projection (e.g., the central gripping projection 132). The one or more anti-nesting projections 140 may additionally function as and appear to be a gripping projection of the plurality of gripping projections 131. Providing the anti-nesting projections 140 within the plurality of gripping projections 131 may camouflage the one or more anti-nesting projections 140 to provide a more esthetically pleasing and comfortable grip.

Additionally, two anti-nesting projections 140 may aid in application of the above-mentioned tamper evidence shrink-wrap. A single anti-nesting projection on each side may lead to unwanted force concentrations on the shrink-wrap, which could lead to the shrink-wrap ripping and inadvertently indicating tampering. However, a single anti-nesting projection on each of the first gripping portion 130a and the second gripping portion 130b is contemplated and possible as is greater than two anti-nesting projections within each of the first gripping portion 130a and the second gripping portion 130b.

The one or more anti-nesting projections 140 may be directly attached to an underside surface 110 of the upper rim 106 and extend along the sidewall 104 of the dosing cup 100 to a length, 1ₐₙ. For example, the one or more gripping portions may have a length, 1ₐₙ, that extends along at least 50% of the overall height of the dosing cup 100 (e.g., about 58% or 21.4 mm based on a dosing cup having an overall height of 36.9 mm). In some embodiments, the one or more anti-nesting projections 140 may extend to the first step out 120. With reference to FIG. 4A and 4B, the one or more anti-nesting projections 140 may be long enough, so as to prevent the second dosing cup 100b from extending or contacting one or more retention beads 150 formed on an interior surface 107 of the sidewall 104 of the cup. The one or more retention beads 150 are discussed in greater detail below.

Referring again to FIGS. 1A-1H, one or more retention beads 150 may be formed on an interior surface 107 of the sidewall 104 opposite both the first gripping portion 130a and the second gripping portion 130b. That is, the one or more retention beads 150 may be camouflaged from the view by the first and the second gripping portions 130a, 130b and are positioned so as not to interfere with reading the dosage amount indicators 127. The one or more retention beads 150 are configured to releasably engage a portion of a bottle 201 (e.g., a cap or closure of a bottle 201) to secure the dosing cup 100 to the bottle 201 (e.g., a cap or closure of the bottle 201). The one or more retention beads 150 may make it convenient for a user to store the dosing cup 100 on the bottle 201 so as not to lose the dosing cup 100.

In some embodiments, the one or more retention beads 150 may include a plurality of beads behind each of the first gripping portion 130a and the second gripping portion 130b or a single bead behind each of the first gripping portion 130a and the second gripping portion 130b. One advantage to locating the retention beads 150 behind the gripping portions is that the retention beads 150 will not interfere with the user's ability to read the dosing indicia. For example, only a single retention bead may be positioned behind each of the first gripping portion 130a and the second gripping portion 130b. The retention bead 150 may be an elongate bead extending along the interior surface 107 of the sidewall 104 in a direction generally parallel to the upper rim 106 of the dosing cup 100. While the one or more retention beads 150 may be any size, in some embodiments the one or more retention beads 150 may have a width, wᵣ, of between about 8 mm and about 14 mm (e.g., about 12 mm), as illustrated in FIG. 1F.

The one or more retention beads 150 may include a first surface 151 extending from the interior surface 107 of the sidewall 104 and a second surface 152 extending from the interior surface 107 of the sidewall 104 at a position below the first surface 151 and intersecting with the first surface 151. The first surface 151 and the second surface 152 may smoothly transition into the sidewall 104 so as not to provide any structure against which medicinal fluid may be retained. The second surface 152 may be angled relative to a horizontal axis, x, passing through the point of intersection at an angle, α₂, greater than an angle, α₁, of the first surface 151. That is the slope of the second surface 152 (e.g., about 40 degrees or more, about 60 degrees or more, etc.) may be greater than the slope of the first surface 151 (e.g., about 10 degrees or more, about 15 degrees or more, about 20 degrees or more, etc.). In other embodiments, the slopes may be equal to one another, or the first slope may be greater than the second slope. The one or more retention beads 150 may further have any height. However, in some embodiments, the height, hᵣ, of the one or more retention beads 150 may be between about 2 mm to about 3 mm (e.g., about 2.5 mm), as illustrated in FIG. 1F.

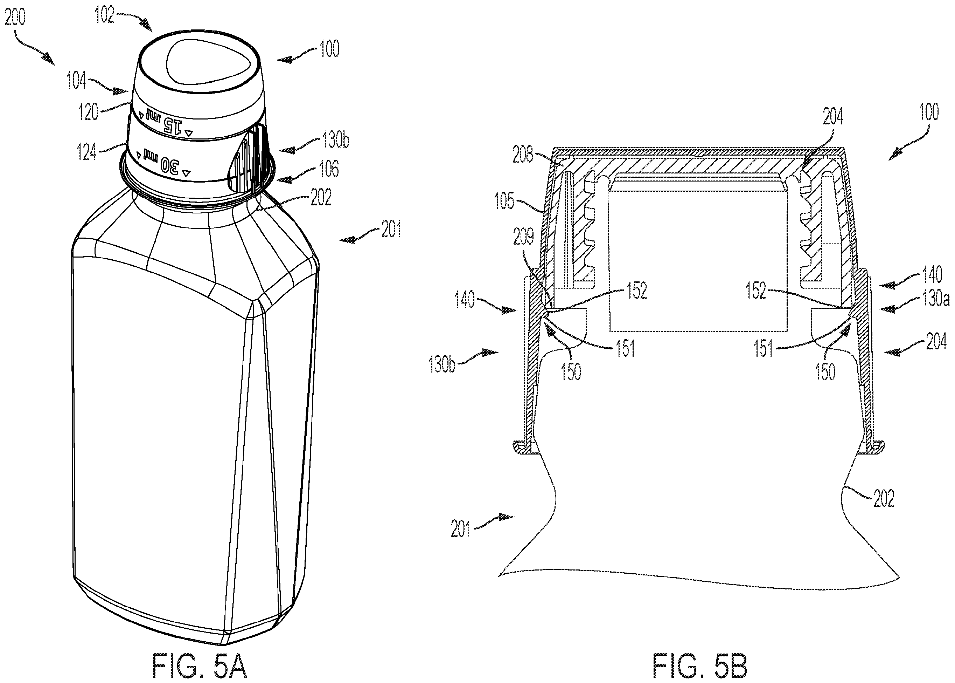

It is noted that while the one or more retention beads 150 are positioned above the first step out 120 and below the second step out 124, the one or more retention beads 150 may be positioned below the first step out 120 or above the second step depending on the shape and/or dimensions of the bottle 201 to which the dosing cup 100 is attached. The one or more retention beads 150 can be disposed on a middle portion of the interior surface 107 of the sidewall 104 at a position configured to engage the edge of a bottle cap in order to secure the dosing cup to the bottle. FIG. 5A depicts a medicinal fluid delivery system 200 including a bottle 201 and the dosing cup 100, described above. The bottle 201 is configured to store a medicinal fluid. The dosing cup 100 is shown as attached to the bottle 201. Referring to FIG. 5B, a cross-section of the bottle 201 at the dosing cup 100 is depicted. As shown, the bottle 201 includes a neck 202, and a spout 204 connected to the neck 202 through which medicinal fluid may be poured. Attached to the neck 202 is a bottle cap 208. The bottle cap 208 may be a screw-on bottle cap that engages a thread formed on the spout 204. When positioned over the bottle 201 the one or more retention beads 150 allow the dosing cup 100 to be snapped on and off a portion of the bottle 201 to selectively attach the dosing cup 100 to the bottle 201. For example, the one or more retention beads 150 may engage edge of the bottle cap 208. Stated another way, the one or more retention beads 150 may extend around an edge 209 of the bottle cap 208 such that the dosing cup 100 is held in place to the bottle cap 208 by the one or more retention beads 150. In embodiments, flexibility of the dosing cup 100 allows the one or more retention beads 150 the cup to elastically deform to allow the one or more retention beads 150 to snap on or off the bottle cap 208. The sloped second surface 142 of the one or more retention beads 150 may allow a user to easily guide the dosing cup 100 off of the bottle cap 208.

It should now be understood that embodiments of the present disclosure are directed to dosing cups for delivery of a medicinal fluid and to medicinal fluid delivery systems. In general dosing cups and medicinal fluid delivery systems as describe herein are directed to including structures such as anti-nesting features for prevention of nesting of dosing cups during manufacture, gripping features for holding and orienting the dosing cup, visual aids for determining proper dosage amounts, and/or retention beads that allow the dosing cup to be removable engaged with a body of the medicinal fluid delivery system.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." Values disclosed herein as ends of ranges are not to be understood as being strictly limited to the exact numerical values recited. Instead, unless otherwise specified, each numerical range is intended to mean both the recited values and any real numbers including integers within the range. For example, a range disclosed as "1 to 10" is intended to mean "1, 2, 3, 4, 5, 6, 7, 8, 9, and 10" and a range disclosed as "1 to 2" is intended to mean "1.1, 1.2, 1.3, 1.4, 1.5, 1.6, 1.7, 1.8, 1.9, and 2.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A dosing cup (100) for delivery of a medicinal fluid, the dosing cup comprising:
a base wall (102);
a sidewall (104) extending from the base wall (102) to an upper rim (106), thereby defining a medicinal fluid-receiving volume (108);
a first gripping portion (130a) formed at a first position (116) of the sidewall (104); and second gripping portion (130b) formed at a second position (118) of the sidewall (104) opposite the first position (116) across the medicinal fluid-receiving volume (108), **characterized in that** each of the first gripping portion (130a) and the second gripping portion (130b) comprise one or more anti-nesting projections (140) that extend from an exterior surface (105) of the sidewall (104) a distance beyond an inner diameter (di) of the upper rim (106), wherein the anti-nesting projections (140) are configured to engage an upper rim (106) of a second dosing cup (100b) to prevent the dosing cup (100) from nesting within the second dosing cup (110b).

2. The dosing cup (100) of claim 1, wherein the one or more anti-nesting projections (140) of the first gripping portion (130a) and the second gripping portion (130b) comprise at least two anti-nesting projections (140).

3. The dosing cup (100) of any one of claims 1 or 2, wherein:
each of the first gripping portion (130a) and the second gripping portion (130b) further comprise a plurality of gripping projections (131); and
the one or more anti-nesting projections (140) are interspersed among the plurality of gripping projections (131).

4. The dosing cup (100) of claim 3, wherein the plurality of gripping projections (131) define a gradient length having a maximum length at a center of the first gripping portion (130a) and the second gripping portion (130b) and a decreasing length outward from the center of the first gripping portion (130a) and the second gripping portion (130b).

5. The dosing cup (100) of any one of claims 3 or 4, wherein the one or more anti-nesting projections (140) extend further from the exterior surface (105) of the sidewall (104) than the plurality of gripping projections (131).

6. The dosing cup (100) of any one of the preceding claims, wherein the one or more anti-nesting projections (140) extends from the upper rim (106) along the sidewall (104) at least half a height of the dosing cup (100).

7. The dosing cup (100) of any one of the preceding claims, further comprising one or more retention beads (150) formed on an interior surface (107) of the sidewall (104) opposite both the first gripping portion (130a) and the second gripping portion (130b), wherein the one or more retention beads (150) are configured to releasably engage a portion of a bottle (201) to secure the dosing cup (100) to the bottle (201).

8. The dosing cup (100) of claim 7, wherein each of the one or more retention beads (150) comprise:
a first surface (151) extending from the interior surface (107) of the sidewall (104); and
a second surface (152) extending from the interior surface (107) of the sidewall (104) at a position below the first surface (151) and intersecting with the first surface (151),
wherein:
the second surface (151) is angled relative to a horizontal axis (X) at an angle greater than the first surface (152).

9. A medicinal fluid delivery system (200) comprising:
a bottle (201); and
the dosing cup (100) of any one of the preceding claims 1 to 6, wherein the dosing cup (100) is configured to releasably engage a portion of the bottle (201).

10. A medicinal fluid delivery system (200) comprising :
a bottle (201); and
the dosing cup (100) of claims 7 or 8, wherein the dosing cup (100) is configured to releasably engage a portion of the bottle (201).

11. The medicinal fluid delivery system (200) of claim 10, wherein the sidewall (104) comprises:
a first step out (120) defining a first volume (122); and
a second step out (124) defining a second volume (126).

12. The medicinal fluid delivery system (200) of claim 11, further comprising a dosage amount indicator (127) positioned on the sidewall (104) between the first gripping portion (130a) and the second gripping portion (130b).

## Patentansprüche

1. Dosierbecher (100) für eine Abgabe eines medizinischen Fluids, der Dosierbecher umfassend:
eine Basiswand (102);
eine Seitenwand (104), die sich von der Basiswand (102) zu einem oberen Rand (106) erstreckt, wobei dadurch ein medizinisches Fluidaufnahmevolumen (108) definiert wird;
einen ersten Greifabschnitt (130a), der an einer ersten Position (116) der Seitenwand (104) ausgebildet ist; und
einen zweiten Greifabschnitt (130b), der an einer zweiten Position (118) der Seitenwand (104) gegenüber der ersten Position (116) über das medizinische Fluidaufnahmevolumen (108) hinweg ausgebildet ist, **dadurch gekennzeichnet, dass** jeder des ersten Greifabschnitts (130a) und des zweiten Greifabschnitts (130b) einen oder mehrere Antiverschachtelungsvorsprünge (140) umfasst, die sich von einer Außenoberfläche (105) der Seitenwand (104) einen Abstand über einen Innendurchmesser (di) des oberen Rands (106) hinaus erstrecken, wobei die Antiverschachtelungsvorsprünge (140) konfiguriert sind, um einen oberen Rand (106) eines zweiten Dosierbechers (100b) in Eingriff zu nehmen, um zu verhindern, dass sich der Dosierbecher (100) innerhalb des zweiten Dosierbechers (110b) verschachtelt.

2. Dosierbecher (100) nach Anspruch 1, wobei der eine oder die mehreren Antiverschachtelungsvorsprünge (140) des ersten Greifabschnitts (130a) und des zweiten Greifabschnitts (130b) wenigstens zwei Antiverschachtelungsvorsprünge (140) umfassen.

3. Dosierbecher (100) nach einem der Ansprüche 1 oder 2, wobei:
jeder des ersten Greifabschnitts (130a) und des zweiten Greifabschnitts (130b) ferner eine Vielzahl von Greifvorsprüngen (131) umfasst; und
der eine oder die mehreren Antiverschachtelungsvorsprünge (140) zwischen der Vielzahl von Greifvorsprüngen (131) durchsetzt sind.

4. Dosierbecher (100) nach Anspruch 3, wobei die Vielzahl von Greifvorsprüngen (131) eine Gradientenlänge definieren, die eine maximale Länge in einer Mitte des ersten Greifabschnitts (130a) und des zweiten Greifabschnitts (130b) und eine abnehmende Länge nach außen von der Mitte des ersten Greifabschnitts (130a) und des zweiten Greifabschnitts (130b) aufweist.

5. Dosierbecher (100) nach einem der Ansprüche 3 oder 4, wobei sich der eine oder die mehreren Antiverschachtelungsvorsprünge (140) weiter von der Außenoberfläche (105) der Seitenwand (104) als die Vielzahl von Greifvorsprüngen (131) erstrecken.

6. Dosierbecher (100) nach einem der vorstehenden Ansprüche, wobei sich der eine oder die mehreren Antiverschachtelungsvorsprünge (140) von dem oberen Rand (106) entlang der Seitenwand (104) wenigstens einer Hälfte einer Höhe des Dosierbechers (100) erstrecken.

7. Dosierbecher (100) nach einem der vorstehenden Ansprüche, ferner umfassend eine oder mehrere Retentionsperlen (150), die auf einer Innenoberfläche (107) der Seitenwand (104) gegenüber sowohl dem ersten Greifabschnitt (130a) als auch dem zweiten Greifabschnitt (130b) ausgebildet sind, wobei die eine oder die mehreren Retentionsperlen (150) konfiguriert sind, um einen Abschnitt einer Flasche (201) lösbar in Eingriff zu nehmen, um den Dosierbecher (100) an der Flasche (201) zu befestigen.

8. Dosierbecher (100) nach Anspruch 7, wobei jede der einen oder mehreren Retentionsperlen (150) umfasst:
eine erste Oberfläche (151), die sich von der Innenoberfläche (107) der Seitenwand (104) erstreckt; und
eine zweite Oberfläche (152), die sich von der Innenoberfläche (107) der Seitenwand (104) an einer Position unterhalb der ersten Oberfläche (151) erstreckt und sich mit der ersten Oberfläche (151) schneidet; wobei:
die zweite Oberfläche (151) relativ zu einer horizontalen Achse (X) in einem Winkel abgewinkelt ist, der größer als die erste Oberfläche (152) ist.

9. Medizinisches Fluidabgabesystem (200), umfassend:
eine Flasche (201); und
der Dosierbecher (100) nach einem der vorstehenden Ansprüche 1 bis 6, wobei der Dosierbecher (100) konfiguriert ist, um einen Abschnitt der Flasche (201) lösbar in Eingriff zu nehmen.

10. Medizinisches Fluidabgabesystem (200), umfassend:
eine Flasche (201); und
der Dosierbecher (100) nach Anspruch 7 oder 8, wobei der Dosierbecher (100) konfiguriert ist, um einen Abschnitt der Flasche (201) lösbar in Eingriff zu nehmen.

11. Medizinisches Fluidabgabesystem (200) nach Anspruch 10, wobei die Seitenwand (104) umfasst:
einen ersten vorstehenden Teil (120), der ein erstes Volumen (122) definiert; und
einen zweiten vorstehenden Teil (124), der ein zweites Volumen (126) definiert.

12. Medizinisches Fluidabgabesystem (200) nach Anspruch 11, ferner umfassend einen Dosiermengenindikator (127), der auf der Seitenwand (104) zwischen dem ersten Greifabschnitt (130a) und dem zweiten Greifabschnitt (130b) angeordnet ist.

## Revendications

1. Coupelle de dosage (100) destinée à l'administration d'un fluide médical, la coupelle de dosage comprenant :
une paroi de base (102) ;
une paroi latérale (104) s'étendant de la paroi de base (102) jusqu'à un rebord supérieur (106), définissant ainsi un volume de réception de fluide médical (108) ;
une première partie de préhension (130a) formée au niveau d'une première position (116) de la paroi latérale (104) ; et
une seconde partie de préhension (130b) formée au niveau d'une seconde position (118) de la paroi latérale (104) opposée à la première position (116) à travers le volume de réception de fluide médical (108), **caractérisé en ce que** chacune de la première partie de préhension (130a) et de la seconde partie de préhension (130b) comprend une ou plusieurs saillies anti-emboîtement (140) qui s'étendent à partir d'une surface extérieure (105) de la paroi latérale (104) d'une distance au-delà d'un diamètre interne (di) du rebord supérieur (106), dans lequel les saillies anti-emboîtement (140) sont conçues pour venir en prise avec un rebord supérieur (106) d'une seconde coupelle de dosage (100b) pour empêcher la coupelle de dosage (100) de s'emboîter dans la seconde coupelle de dosage (110b).

2. Coupelle de dosage (100) selon la revendication 1, dans laquelle la ou les saillies anti-emboîtement (140) de la première partie de préhension (130a) et de la seconde partie de préhension (130b) comprennent au moins deux saillies anti-emboîtement (140).

3. Coupelle de dosage (100) selon l'une quelconque des revendications 1 à 2, dans laquelle :
chacune de la première partie de préhension (130a) et de la seconde partie de préhension (130b) comprend en outre une pluralité de saillies de préhension (131) ; et
la ou les saillies anti-emboîtement (140) sont intercalées parmi la pluralité de saillies de préhension (131).

4. Coupelle de dosage (100) selon la revendication 3, dans laquelle la pluralité de saillies de préhension (131) définissent une longueur de gradient ayant une longueur maximale au niveau d'un centre de la première partie de préhension (130a) et de la seconde partie de préhension (130b) et une longueur décroissante vers l'extérieur depuis le centre de la première partie de préhension (130a) et de la seconde partie de préhension (130b).

5. Coupelle de dosage (100) selon l'une quelconque des revendications 3 ou 4, dans laquelle la ou les saillies anti-emboîtement (140) s'étendant plus loin de la surface extérieure (105) de la paroi latérale (104) que la pluralité de saillies de préhension (131).

6. Coupelle de dosage (100) selon l'une quelconque des revendications précédentes, dans laquelle la ou les saillies anti-emboîtement (140) s'étendent à partir du rebord supérieur (106) le long de la paroi latérale (104) au moins d'une demi-hauteur de la coupelle de dosage (100).

7. Coupelle de dosage (100) selon l'une quelconque des revendications précédentes, comprenant en outre un ou plusieurs bourrelets de retenue (150) formés sur une surface intérieure (107) de la paroi latérale (104) opposée à la fois à la première partie de préhension (130a) et à la seconde partie de préhension (130b), dans laquelle le ou les bourrelets de retenue (150) sont conçus pour venir en prise de manière libérable avec une partie d'une bouteille (201) pour fixer la coupelle de dosage (100) à la bouteille (201).

8. Coupelle de dosage (100) selon la revendication 7, dans laquelle chacun du ou des bourrelets de retenue (150) comprend :
une première surface (151) s'étendant depuis la surface intérieure (107) de la paroi latérale (104) ; et
une seconde surface (152) s'étendant de la surface intérieure (107) de la paroi latérale (104) au niveau d'une position sous la première surface (151) et coupant la première surface (151), dans lequel :
la seconde surface (151) est inclinée par rapport à un axe horizontal (X) selon un angle supérieur à la première surface (152).

9. Système d'administration de fluide médical (200) comprenant :
une bouteille (201) ; et
la coupelle de dosage (100) selon l'une quelconque des revendications précédentes 1 à 6, dans laquelle la coupelle de dosage (100) est conçue pour venir en prise de manière libérable avec une partie de la bouteille (201).

10. Système d'administration de fluide médical (200) comprenant :
une bouteille (201) ; et
la coupelle de dosage (100) selon les revendications 7 ou 8, dans lequel la coupelle de dosage (100) est conçue pour venir en prise de manière libérable avec une partie de la bouteille (201).

11. Système d'administration de fluide médical (200) selon la revendication 10, dans lequel la paroi latérale (104) comprend :
une première étape (120) définissant un premier volume (122) ; et
une seconde étape (124) définissant un second volume (126).

12. Système d'administration de fluide médical (200) selon la revendication 11, comprenant en outre un indicateur de quantité de dosage (127) positionné sur la paroi latérale (104) entre la première partie de préhension (130a) et la seconde partie de préhension (130b).
